# EUROPEAN PATENT SPECIFICATION

(11) **EP 1 530 025 B1**
(45) Date of publication and mention of the grant of the patent: **31.12.2008**
(21) Application number: 04022557.5
(22) Date of filing: 22.09.2004
(51) Int. Cl.: G01C 21/34

(54) **Adaptive navigation system with artificial intelligence**
Anpassungsfähiges Navigationssystem mit künstlicher Intelligenz
Système de navigation adaptatif utilisant de l'intelligence artificielle

(30) Priority: 07.11.2003 US 703290
(43) Date of publication of application: 11.05.2005
(73) Proprietor: HARMAN INTERNATIONAL INDUSTRIES, INCORPORATED, Northridge, CA 91329 (US)
(72) Inventor: Montealegre, Steve E., Farmington Hills MI 48331 (US); Dissosway, Marc A., Bloomington IN 47402 (US); Hammer, Karl, 76307 Karlsbad (DE)
(74) Representative: Grünecker, Kinkeldey, Stockmair & Schwanhäusser Anwaltssozietät

(56) References cited:
- EP-A- 1 111 340
- DE-A1- 10 030 932
- DE-A1- 19 933 638
- US-A- 6 154 152
- US-B1- 6 199 011
- PATENT ABSTRACTS OF JAPAN vol. 2000, no. 01, 31 January 2000 (2000-01-31) & JP 11 271070 A (HITACHI LTD; HITACHI TOKYO ELECTRONICS CO LTD), 5 October 1999 (1999-10-05)
- PATENT ABSTRACTS OF JAPAN vol. 1997, no. 02, 28 February 1997 (1997-02-28) & JP 08 271272 A (MATSUSHITA ELECTRIC IND CO LTD), 18 October 1996 (1996-10-18)

## Description

### BACKGROUND OF THE INVENTION

### 1. Technical Field.

This invention relates generally to vehicle navigation systems and, more particularly, to an adaptive navigation system that is capable of taking into account and learning driver habits, mistakes in the digital map database and new roads that are constructed after the digital map database has been released.

### 2. Related Art.

Vehicle navigation systems are becoming increasingly popular in the automobile industry. A typical vehicle navigation system may include a global positioning system ("GPS") receiver that may be mounted somewhere on the vehicle. The GPS receiver is capable of communicating with a satellite-based global positioning system or other localized positioning systems. The GPS receiver obtains geographic position information that may be converted into some form of display for the vehicle operator indicating the position of the vehicle relative to previously determined reference points or other known landmarks in a given map database. Other systems and devices may also be used to determine the geographic position of the vehicle as well.

The typical vehicle navigation system may also include a digital map database that includes digitized map information that can be processed by a navigation computer designed to handle map-related functions. The map information may be related to roads and various types of road data as well as waterway data. A map-matching module or software routine may be used to match the position or trajectory measured by a positioning module to a position associated with a location or route on a map provided from the digital map database. The positioning module may receive its information from the GPS receiver.

The typical vehicle navigation system may also include a human-machine interface module that provides users with a way to interact with the navigation system. A visual display is typically used to convert signals into a visual image in real time for direct interpretation by the user. As such, displays are used to provide optical driver recommendations, which are usually conveyed by a digital map generated on the display. The display itself is typically an electro-optical device such as a liquid crystal display ("LCD"), a cathode-ray tube ("CRT") display, an electroluminescent display ("ELD"), a heads-up display ("HUD"), a plasma display panel ("PDP"), a vacuum fluorescent display ("VFD"), or a touch-screen display.

A route calculation module may also be included that is used to plan a route prior to or during a trip. One commonly used technique is to find a minimum-travel-cost route, which is designed to minimize the amount of distance traveled and the costs associated with reaching a predetermined destination. Other techniques exist that integrate the time one needs if using dedicated roads or may use information about traffic congestion on the route to calculate a route that avoids the traffic congestion. A route guidance module may also be included that is used to guide the driver along the route generated by the route planning module. The real time or en-route guidance is typically generated using optical driver recommendations on the display and may also include acoustic driver recommendations.

As generally set forth above, current navigation radio products determine a route based on 1) a fixed map database that may reside in a media such as a compact-disc ("CD"), a digital-video disc ("DVD") or hard drive and 2) a fixed algorithm such as Dijkstra's shortest route algorithm. Given the same starting conditions and the same destination, the navigation radio should provide identical results each time.

DE 199 33 638 A1 relates to a navigation method in which a non-specified route, which is achieved by departing from the specified route, is stored so as to later on provide said new route to the user. In more detail, DE 199 33 638 A1 deals with the problem that a driver will usually select courses that he prefers and do not coincide with the specified route proposed by the navigation system. For instance, there may be in fact faster routes that the navigation system cannot find in the digital map base, because of its fixedly specified average speeds. Consequently, the document suggests adapting the navigation system so as to learn so-called regular routes that the user prefers to drive instead of insisting on the specified route. At the same time, the navigation system optionally can learn new roads or streets if the driver chooses a course over roads that are not yet stored in the digital map base of the navigation system. Within the course preferred by the driver, the route segment pre-specified by the navigation system is replaced by the alternative leg of the driver, wherein the alternative leg is defined between a first location, where the driver leaves a specified route, to a second location, where the driver returns to the specified route.

DE 100 30 932 A1 also relates to a navigation method, in which a street map is generated, verified, complemented and/or updated during the journey. The underlying problem of this document refers to streets which have been incorrectly recorded or have changed due to construction works and similar reasons. Therefore, it will usually take a long time until the street maps are updated. Therefore, DE 100 30 932 A1 proposes to log the position data of several vehicles during their journey. By continually measuring the position of a vehicle, it is possible to obtain data to verify or complement already available street data. The position data of the vehicles are centrally collected and then statistically evaluated. As a result, it is possible to achieve a higher precision of the street data and it is also possible to recognize errors in the available data or recognize new streets. The street map data is thus centrally generated, verified, complemented and/or updated. This updated street data is then provided to the navigation systems of the vehicles.

US Patent No. 6,154,152 is a road data maintenance system in which previous unpossessed road data is added to possessed road data. If the current position of a vehicle deviates from a known existing road in the database, it is determined that the vehicle travels on an unpossessed road. The road data of the unpossessed road is then obtained based on the travel trajectory of the vehicle.

US Patent No. 6,154,152 deals with a problem, that is, since map marking is not carried out frequently, provision of new road data is delayed probably by months, so that the street data is usually out of date. It is suggested therein to provide an information centre, which holds the current street data, with information on new unpossessed roads, identified by the navigation systems of the vehicles. In particular, the unpossessed road is determined when the current position of the vehicle is away from the road of which data is stored in the current road map data, and the length of the travel trajectory of the vehicle exceeds a predetermined length. Also, the current position of the vehicle should be more than a predetermined distance away from the road so as to eliminate the possibility that a new road is identified due to inaccuracies of the vehicle position measuring system. The travel locus data is calculated between two points, one of which is a location where the vehicle deviates from the possessed road, and the other one is a location where the vehicle returned to the possessed road. The data is obtained by sequentially measuring the co-ordinates of the current position of the vehicle.

Japanese patent application 08271272 relates to a navigation apparatus in which a road which is not contained in road information is registered as a new road. In more detail, when it is detected that the own vehicle position is off from road information contained in the navigation apparatus, the road is registered as a new road.

Improvements have been made (particularly in Europe) where external information may be received from an integrated dynamic navigation ("TMC") system. In these systems, traffic information is provided on a data channel through an FM radio station thereby allowing the navigation radio to dynamically adapt a given route based on traffic conditions. Some have proposed using a wireless infrastructure that connects the navigation radio to a server that replaces the fixed media database with data from the network connection established by the wireless infrastructure.

Navigation system algorithms do not take into account driver habits, mistakes in the database and new roads that are constructed after the map data in the database was released into fixed media. As such, this limits the functionality of the navigation radio and causes the user to pay significant fees to update the fixed map database. It also frustrates the driver when the navigation system disregards driver preferences and contradicts the route a driver takes, for example from home to work. In some locations, such as the United States, the driver of the vehicle may also not have the advantage of TMC to provide updates about congested roads and automatically reroute a vehicle to avoid the congested roads. In the absence of such data, it would be advantageous to provide a means of avoiding roads that are regularly congested at certain times of the day.

### SUMMARY

This invention discloses a vehicle navigation system that incorporates the use of artificial intelligence so that the vehicle navigation system learns as a driver operates the vehicle. The vehicle navigation system takes into account driver habits and preferences, mistakes in the digital map database and new roads that may have been constructed after the digital map database has been released. The driver habits or preferences may be stored in a database in a storage device and may be used by the vehicle navigation system to automatically guide the driver to learned destinations based on driver habits. If a mistake exists in the digital map database, the vehicle navigation system can correct the mistake and store the updated information in the database or an update file. Further, the vehicle navigation system may be provided with the ability to learn new roads that may have been constructed or missed when the map database was released for use by the vehicle navigation system.

The vehicle navigation system may include a navigation control unit that may be connected with a display, a user input device, a digital map database, a positioning system, a storage device and a traffic event notification device. The display may be used to generate a graphical representation of a road network map included in the digital map database that may be used to guide the driver along a route to a predetermined destination. In addition, the display may be used as an input device if the display comprises a touch-screen display. The user input device may be used by the driver to enter information about the trip destination as well as other travel options or restrictions as desired by the driver of the vehicle.

An artificial intelligence ("AI") module may be included in the vehicle navigation system that is connected with or associated with the positioning system, a map-matching module, a route calculation module, a user interface module, a route guidance module, and the digital map database. The AI module may be capable of learning habits or preferences that the driver prefers instead of always choosing a route for the driver. Mistakes in the digital map database may also be learned by the AI module and corrected in the digital map database. The AI module may also be capable of mapping out and storing new roads or road segments in the digital map database.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
Figure 1 is a block diagram of some of the hardware components of a navigation system.
Figure 2 is a block diagram of the application modules of the navigation system.
Figure 3 is a block diagram of the components of the artificial intelligence module of the navigation system.
Figure 4 is an example flow chart of some of the tasks performed by the habit/preference learning component of the artificial intelligence module.
Figure 5 is an example flow chart of some of the tasks performed by the database error correction component of the artificial intelligence module.
Figure 6 is an example flow chart of some of the tasks performed by the new road learning module of the artificial intelligence module.

### DETAILED DESCRIPTION OF THE PREFERRED EMBODIMENTS

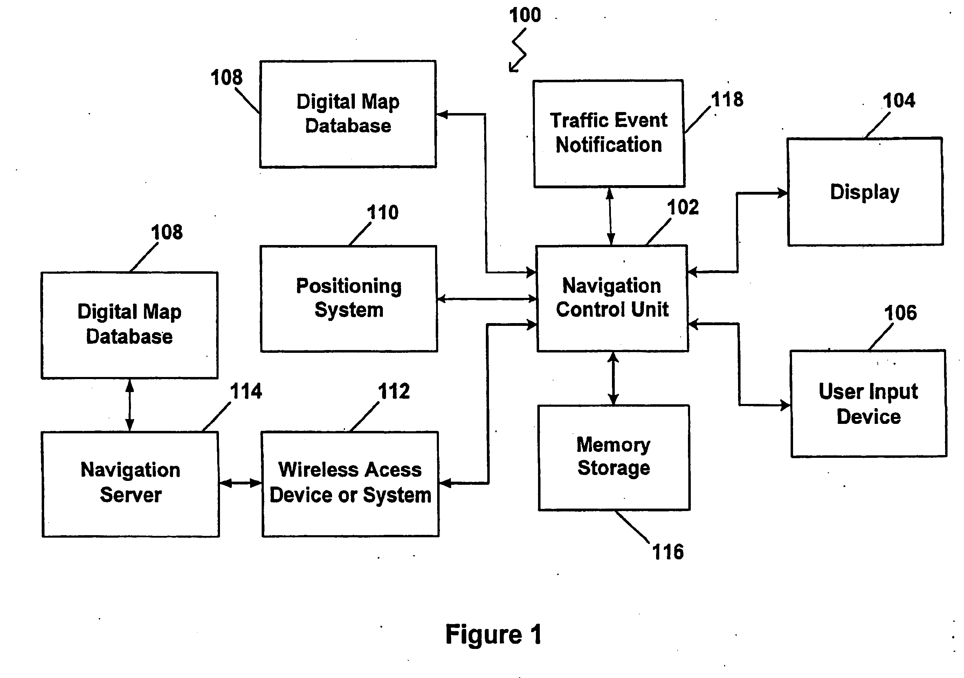

In Figure 1, a navigation system 100 with artificial intelligence that is capable of learning driver habits and preferences, mistakes in map databases and new roads is depicted. As illustrated, the navigation system 100 includes a navigation control unit 102 that processes software modules and components that are programmed to calculate routes from points of origin to destinations as well as provide various other types of data to a driver. Although not specifically illustrated, the navigation control unit 102 may include a Central Processing Unit ("CPU"), a system bus, a Random Access Memory ("RAM"), a Read Only Memory ("ROM"), an I/O adapter for connecting peripheral devices such as hard disc drives, CD drives, a communications adapter, and a display adapter. Various computing devices and components may be used to provide the functionality performed by the navigation control unit 102.

The navigation control unit 102 may be connected with a display 104. In one example, the display 104 may be a touch-screen display that functions as both a display and a user input device. In yet another example, the navigation control unit 102 may be connected with a user input device 106. The user input device 106 may be a keypad, a personal computer, a laptop computer, a pocket PC, a personal digital assistant, a wireless access device or phone, or any other type of device that is capable of allowing a user of the navigation system 100 to input data during operation.

If the user input device 106 communicates wirelessly with the navigation control unit 102, both the navigation control unit 102 and the user input device 106 may be connected with a wireless communication device that is capable of passing the necessary data back and forth between the user input device 106 and the navigation control unit 102. Some illustrative methods of connecting the user input device 106 with the navigation control unit 102 that may be used include infrared, Bluetooth, wireless LAN, Universal Serial Bus, fiber optic, direct wire, parallel ports, serial ports, and a network connection in series.

As further illustrated, the navigation control unit 102 may be connected to a digital map database 108. The digital map database 108 may be located on a hard disc storage device, a CD, a DVD or any other suitable storage medium. The digital map database 108 contains a digital map of road networks for various geographic locations as well as other types of data. The digital map database 108 allows the navigation control unit 102 to display a map of a geographic location including road networks and can help locate an address or destination using a street address or nearby intersections. In addition, the digital map database 108 can help calculate a travel route, can match sensor-detected vehicle trajectory with a known road network to determine more accurately the actual position of the vehicle in relation to the map; or provide travel information such as road classification data, travel guides, landmarks, hotel information, restaurant information and so forth.

The navigation control unit 102 may also be connected to at least one positioning system 110. The positioning system 110 may be used to determine the geographic location or coordinates of a vehicle in which the navigation system 100 is installed. In addition, the positioning system 110 may be capable of determining the trajectory or direction of movement of the vehicle. Positioning involves the determination of the geo-coordinates of the vehicle on the surface of the Earth. Knowing the position and trajectory of the vehicle allows the navigation control unit 102 to determine the position of the vehicle relative to a road network map and the direction of travel. The navigation control unit 102 is also able to provide maneuvering instructions to the driver of the vehicle by knowing the geographic location and trajectory of the vehicle.

Three example types of positioning systems 110 that may be used include a stand-alone system, a satellite-based system, and a terrestrial radio based system. A dead reckoning system is an illustrative stand-alone system that may be used by the navigation system 100. A satellite-based system that may be used involves equipping the vehicle with a global positioning system ("GPS") receiver or any other type of system that uses satellites to determine geographic locations. A terrestrial radio based system is a system that uses measurement techniques to determine the location of the vehicle. Three commonly used measurement techniques for terrestrial positioning are time of arrival ("TOA"), angle of arrival ("AOA"), and time difference of arrival ("TDOA"). A combination of all of the example positioning systems discussed above, as well as others, may be used by the navigation system 100.

A wireless access device 112 may be connected with the navigation control unit 102. The wireless access device 112 may connect the navigation control unit 102 to a navigation server 114. The navigation control unit 102 may log into the navigation server 114 using the wireless access device 112 and each respective device may then be able to exchange data back and forth. A wireless data transmission protocol (such as WAP) may be used to transmit data and route planning information generated by the navigation server 114 or the navigation control unit 102 to and/or from each respective device. The navigation server 114 may also be connected with or associated with the map database 108.

The navigation control unit 102 may also be connected with a memory storage device 116. The memory storage device 116 may be used to store various types of data that is used by the navigation system 100. Trip origins and trip destinations may be stored in the memory storage device 116. In addition, routes to various destinations may be stored in the memory storage device 116. As set forth in detail below, learned driver habits and/or preferences, new roads and mistakes in the digital map database 108 may also be stored in the memory storage device 116. Data may also be stored in the navigation server 114 as well as the navigation system 100. Data may then be transferred to the navigation control unit 102 using the wireless access device 112 if data is stored in the navigation server 114.

The navigation system 100 may also include a traffic event notification device 118 that is capable of receiving incoming notifications of traffic events. The traffic event notification device 118 may be connected with the navigation control unit 102. The navigation control unit 102 may use signals received from the traffic event notification device 118 to dynamically route a vehicle in which the navigation system 100 is installed around traffic obstacles or events that may be in front of the path of the driver. Several different types of traffic event notification devices 118 may be used by the navigation system 100.

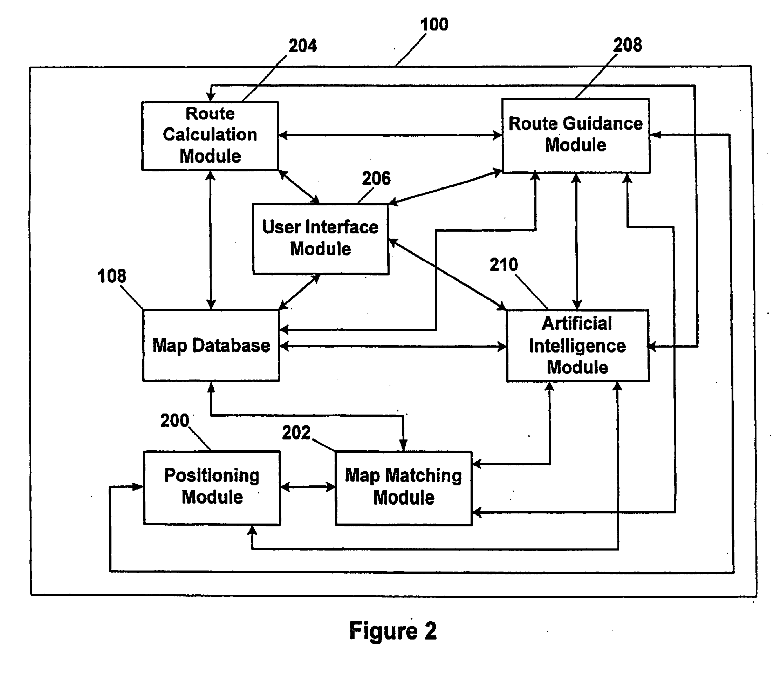

In Figure 2, the example navigation system 100 is illustrated as including a plurality of code segments, software routines, or software modules that use the digital map database 108 to plan routes and guide the driver to destinations. The digital map database 108 contains map information in a predefined format that is capable of being read and used by the navigation control unit 102 or the navigation server 114 illustrated in Figure 1. The navigation control unit 102 may use the map information for map related functions such as identifying and providing locations, address information, road classifications, road restrictions, road names, traffic regulations, travel information and so forth.

The digital map database 108 may also contain a detailed road network map of various geographic locations. The road network map may include nodes and segments that make up roads that are used by vehicles to travel to predetermined destinations. Nodes as the term is used herein may be defined as locations that road intersections exist or where exits or entrances from roads exist and segments may be defined as sections of roads that exist between respective nodes.

A positioning module 200 may be included that determines the geographic location and trajectory of the vehicle using input signals from the positioning system 110. As set forth above, several different positioning systems 110 may be used to determine the trajectory and geographic position of the vehicle. The positioning module 200 may include an integration algorithm that uses signals generated by the positioning system 110 to determine the precise geographic location and trajectory of the vehicle.

Once the geographic location and trajectory of the vehicle have been determined, a map-matching module 202 may be used to match the geographic location of the vehicle with a position on the road network map generated from the digital map database 108. A map-matching algorithm of the map-matching module 202 may be used to place the vehicle in the proper location on the road network map. The map-matching module 202 is capable of correlating the vehicle position and trajectory from the positioning module 200 to the road network map by comparing the vehicle trajectory and location with the map data present in the digital map database 108.

The navigation control unit 102 may also include a route calculation module 204. Route calculation is the process of planning a route prior to or during a trip to a predetermined destination. The route calculation module 204 may use a shortest path algorithm, such as Diikstra's shortest route algorithm, to determine a recommended route from a trip origin to a trip destination. Different shortest path algorithms and variations of shortest path algorithms may be used in the navigation system 100 as well as other types of algorithms.

Although not illustrated, the route calculation module 204 may also include a route optimization module that uses planning criteria to plan the route. The quality of any given route may depend on many factors and selection criteria such as distance, road types, speed limits, location, number of stops, number of turns and traffic information. The route selection criteria can either be fixed at manufacture or may be implemented through a user interface module 206. Determination of the best route uses the selection criteria and a digital road network map retrieved from the digital map database 108 to minimize distance and travel time. The navigation system 100 may also allow drivers to compute routes interactively by opening or closing nodes or segments in the road network map.

In Figure 2, the navigation control unit 102 may also include the user interface module 206. The user interface module 206 may generate a graphical user interface ("GUI") on the display 104. The user interface module 206 may also allow a user of the navigation system 100 to interact with the navigation system 100 and enter inputs into the navigation system 100. The user interface module 206 may receive inputs from the display 104 if it is a touch-screen display. The user input device 106 may also be used to enter inputs into the user interface module 206. The user inputs may be provided to the route calculation module 204, which may then calculate a route to the destination that is input by the driver.

The navigation control unit 102 may also include a route guidance module 208. The route guidance module 208 may guide the driver along the route generated by the route calculation module 204. The route guidance module 208 may use the positioning module 200, the digital map database 108 and the map-matching module 202 to guide the driver along the route to their respective destination. The guidance may be provided to the driver in a graphic format or as acoustical driver recommendations. The route guidance module 208 may also allow the user interface module 206 to generate a road network map GUI on the display 104 that illustrates where the vehicle is located on the road network map and the direction the vehicle is traveling and needs to travel.

The navigation control unit 102 may also include an artificial intelligence (AI) module 210. One function of the AI module 210 is to monitor driver habits or preferences so that the navigation system 100 is more in tune with what routes particular drivers desire when traveling to certain destinations. In addition, the AI module 210 is capable of correcting mistakes in the digital map database 108. Road data contained in the digital map database 108 may contain errors that confuse the driver or the navigation system 100. The AI module 210 may also be capable of adding new roads to the digital map database 108 that were either not entered when the digital map database 108 was created or have been newly constructed after the digital map database 108 was released and distributed for use.

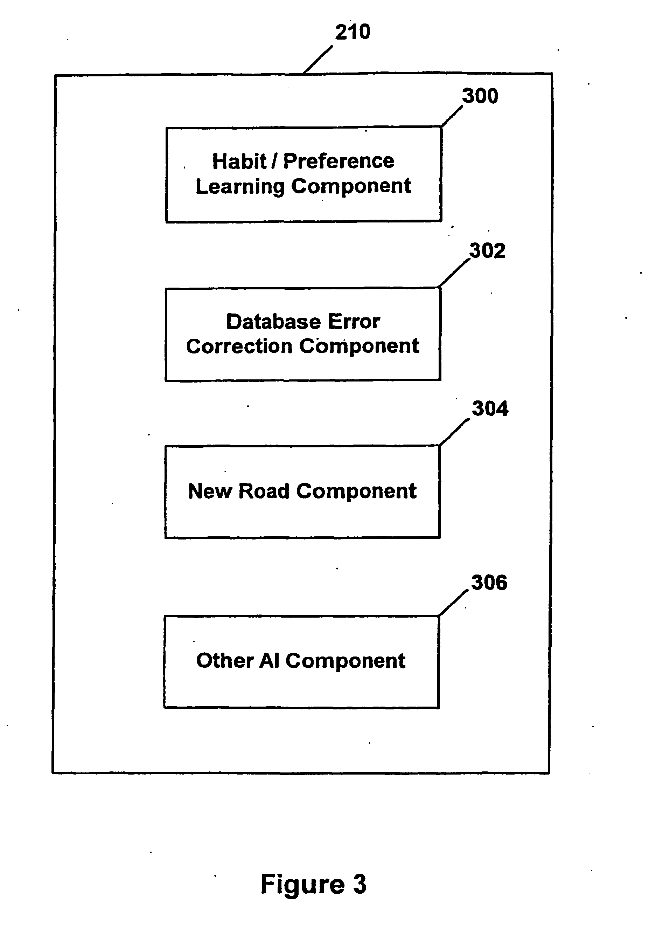

In Figure 3, example components of the AI module 210 are set forth and may include a habit/preference learning component 300, a database error correction component 302, a new road learning component 304 and other types of AI learning components 306. Other types of AI learning components 306 may be implemented to allow the navigation system 100 to learn new restaurants, shopping centers, landmarks, and so forth. The AI module 210 allows the navigation system 100 to learn a particular driver's preferences as well as obtain and record new updated information related to data contained in the digital map database 108.

The habit/preference learning component 300 is responsible for monitoring and learning a particular driver's habits and/or preferences. The database error correction component 302 monitors and detects variations and errors in the data contained in the digital map database 108 and may update the navigation system 100 with correct information. The new road component 304 may detect new roads and add the geographic coordinates of the new roads to the digital map database 108 or the memory storage device 116 for later use by the navigation system 100. The new road component 304 may also allow the driver to input data about the new road such as speed limits and road names.

The habit/preference learning component 300 may be programmed to monitor the daily habits or preferences of a particular driver. On a frequently traveled route, the habit/preference learning component 300 may automatically recommend a driver preferred route to a respective destination instead of the route that may be calculated by the route calculation module 204. As such, the habit/preference learning component 300 may override the route that may be calculated by the route calculation module 204 in favor of the driver preferred route that the driver takes out of habit or out of personal preference.

As an example, a driver normally takes a preferred route to work that deviates from the route that is calculated by the route calculation module 204 using the shortest route algorithm. The driver usually leaves for work between the hours of 7:15 a.m. and 7:45 a.m. on Monday-Friday. After a predetermined amount of times the driver takes the driver preferred route to the destination during these time periods, the habit/preference learning component 300 may update the route calculation module 204 to automatically select and use the preferred route of the driver instead of the route that would normally be calculated by the route calculation module 204.

The habit/preference learning component 300 may also store the preferred route in the memory storage device 116 of the navigation system 100. The navigation system 100 knows to use the preferred route of the driver instead of the route calculated by the route calculation module 204 because the AI module 210 has learned the driver habit or preference to reach that particular destination. Several different scenarios may exist depending upon the origin of the trip and the destination. As another example, a preferred route to a shopping center may be used over the shortest route calculated by the route calculation module 204 because a respective driver simply prefers to take that route to the shopping center.

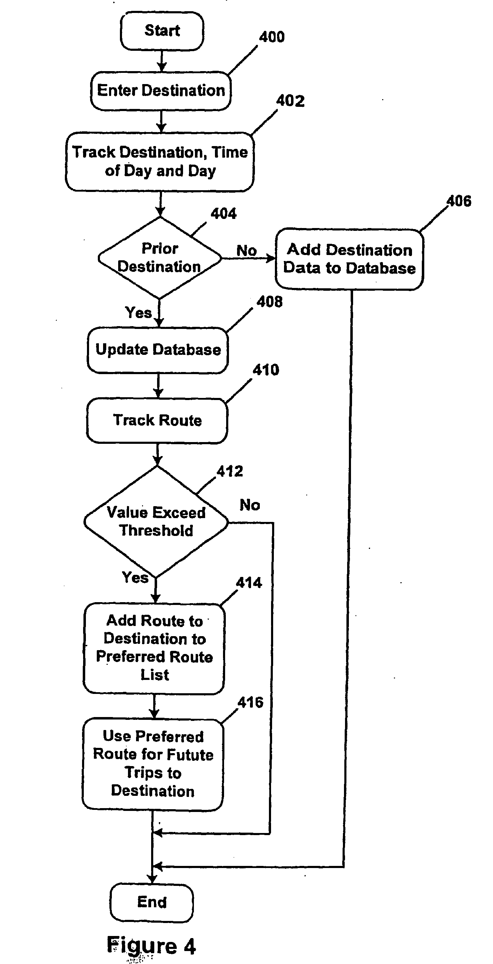

Figure 4 is a flow chart of some of the example tasks that may be performed by the habit/preference learning component 300 discussed with reference to Figures 1-4. At step 400, the driver of the vehicle may enter a destination and the route calculation module 204 may calculate a route to that destination, which is typically based on some form of the shortest path algorithm. In order to learn preferred routes of respective drivers, the habit/preference module 300 may monitor or track each destination that is input by a respective driver, which is represented at step 402. The habit/preference component 300 may record the trip origin, the trip destination, the time of day, the day of the week, the driver and so forth.

At step 404, the habit/preference module 300 may determine if the destination input by the driver is a destination that the driver has input in the past or traveled to several times. If the destination is not a prior destination, meaning it is a new destination, the habit/preference module 300 may add the destination and its associated data (origin, time, day, etc.) to a destination data file that may be stored in the memory storage device 116, which is represented at step 406. If the destination is a destination traveled to at a prior time by the driver, the destination data file in the database may be updated with corresponding data about the current trip at step 408. A counter in a database that is associated with the destination may be updated to reflect another trip to that particular destination by that driver.

The habit/preference module 300 may track the actual route that is taken to the destination by the driver, which is represented at step 410. The actual route taken may be stored in the memory storage device 116 of the navigation system 100. Deviations from the route calculated by the route calculation module 204 may be recorded and stored or the entire route taken by the driver may be stored in the memory storage device 116. As such, a preferred route of the driver to the destination may be stored in the memory storage device 116, which may deviate from the route that is calculated by the route calculation module 204.

At step 412, the habit/preference learning module 300 may determine if the number of times the driver has traveled to that particular destination using the preferred route exceeds a certain threshold value. If the number of times exceeds the threshold value, the AI module 210 may add the preferred route to a preferred route list that may be stored in the digital map database 108 or the memory storage device 116, which is illustrated at step 414. The AI module 210 may inform or program the route calculation module 204 to automatically select and use the preferred route of the driver and not the route calculated using the shortest path algorithm of the route calculation module 204 the next time the driver is traveling to that particular destination, which is represented at step 416. As set forth above, a database may contain a list of preferred routes that is searched before the route calculation module 204 uses some form of the shortest path algorithm to calculate a route. As such, the preferred route of the driver may be used for all future trips to the destination.

Referring to Figures 1-3, below is an example of the habit/preference learning component 300 in operation, which is given merely for illustrative purposes only and is not meant to be a limitation of the invention. A particular driver of a vehicle drives to work every morning on Monday -Friday and normally leaves for work between 7:15 a.m. and 7:45 a.m. The driver has been using a preferred route for several years and does not desire to use the route that is calculated by the route calculation module 204. The driver may have several personal reasons for not using that route, but nonetheless, the navigation system 100 is capable of dynamically adapting and learning driving habits and/or preferences of the driver so that the preferred route of the driver is selected and not the route that may be calculated by the route calculation module 204.

After the driver of the vehicle ignores the route calculated by the route calculation module 204 a predetermined number of times, the AI module 210 sets the calculated route to that particular destination to the preferred route used by the driver. The number of times the driver must deviate from the calculated route may vary. The AI module 210 may also be operable to generate a graphical user interface that prompts the user to inform the navigation system 100 if the route taken by the driver that deviates from the calculated route should be used as the preferred route. As set forth above, the AI module 210 is able to learn driver habits and exploit them for the benefit of the driver.

If the habit/preference learning module 300 was implemented through the navigation server 114, the navigation control unit 102 and the navigation server 114 may exchange data relating to the driver's preference. The navigation server 114 may then store the preferred route in a database file associated with the driver's account on or associated with the navigation server 114. Several of the software modules and components set forth above may reside in various hardware locations and may include applications installed on each device that allows the transfer of data to and from each respective device.

The habit/preference learning module 300 may also be operable to learn roads that are congested during particular times of day. The navigation system 100 may guide the driver along alternative routes that avoid roads that are congested during particular time periods or days of the week. The habit/preference learning module 300 may learn roads that are congested at particular times by monitoring the rate of speed along a given road segment over a period of time. For example, if the driver is traveling along a route that contains a congested road two days in a row, on the third day the navigation system 100 may calculate a route that avoids the congested area automatically without interaction from the driver. The AI module 300 has learned to avoid that particular road segment because of the congestion and recommends a route that avoids that particular road segment.

The database error correction component 302 may be used to track mistakes that occur or are present in the digital map database 108 and take corrective action when necessary. Digital map databases may be purchased from various third-party vendors. The database error correction component 302 is capable of correcting errors in the digital map database 108 located on either the vehicle navigation system 100 or the navigation server 114. The database error correction component 302 learns mistakes in the data contained in the digital map database 108 and corrects the data so that the digital map database 108 contains more accurate data. In addition, a third party owner of the data base could be alerted of potential changes in the digitized data base and the frequency that the users are experiencing these changes.

During a route to a given destination, an error may exist in the data that is contained in the digital map database 108. For example, the geographic coordinates for a given road segment contained in the digital map database 108 may be inaccurate. As such, when the geographic coordinates are received from the positioning system 110, the map that is generated by the navigation system 100 and presented to the user may be erroneous. In other words, the vehicle may be shown to be in a location where there is not a road because of the difference between the coordinates contained in the digital map database 108 and the actual coordinates that are received from the positioning system 110. The database error correction component 302 can correct the data contained in the digital map database 108 so that the vehicle shows up illustrated properly on the road.

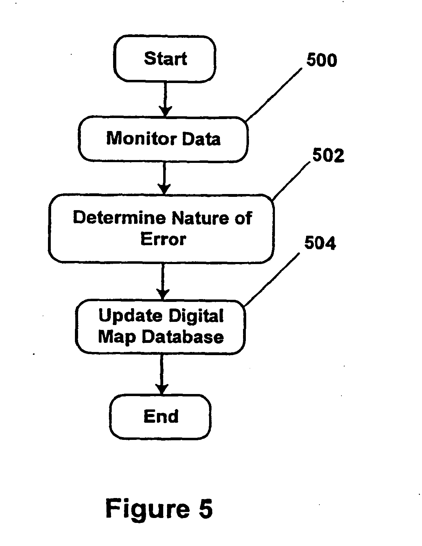

In Figure 5, an example flow chart of how the database error correction component 302 may discover mistakes in the digital map database 108 and correct those mistakes is illustrated with reference to Figures 1-3. The database error correction component 302 may operate in the background and may continuously compare data being received from the positioning system 110 with data contained in the digital map database 108, which is represented at step 500. If an error exists between the data being received by the positioning system 110 and the digital map database 108, the AI module 210 may determine the nature or kind of error that exists in the database, which is represented as step 502.

The nature of the error may vary depending on the location of the vehicle and the contents of the road network map at the geographic location of the vehicle. For instance, let's say the road network map contains data indicating that a road segment that the vehicle is traveling on is straight when in fact, it curves to the left and then back to the right before heading straight again after a predetermined distance. The database error correction component 302 may detect this deviation and update the digital map database 108 to reflect the actual route that the road segment takes and not the erroneous route contained in the digital map database 108. The database error correction component 302 may use data from the positioning system 110 to re-map the road segment at its proper location. The correct data may be stored in the digital map database 108 or the memory storage device 116, which is represented at step 504.

The database error correction component 302 may also allow the driver of the vehicle to enter or edit data in the digital map database 108 as it relates to a particular roadway, address, location, establishment, landmark and so forth. For example, the name of a roadway or street may change, the name of a restaurant or establishment may change over time. This could be expanded to include phone numbers of Points of Interest, zip code errors and the names of towns for lookup purposes. The driver may use the user input device 106 to update or edit the data that is associated with various aspects of the digital map database 108. The updated data may be written to the digital map database 108 or stored in the memory storage device 116.

As previously set forth in Figure 3, the AI module 210 may also include a new road learning component 304 that may be used to learn new roads and/or road segments that may have been constructed since the digital map database 108 was released. The new road learning component 304 may also learn roads that were not included in the original version of the digital map database 108. The driver may use the user input device 116 to enter data about the new roads that are learned by the new road learning component 304. The data about the new roads may be stored on the digital map database 108 or in the memory storage device 116.

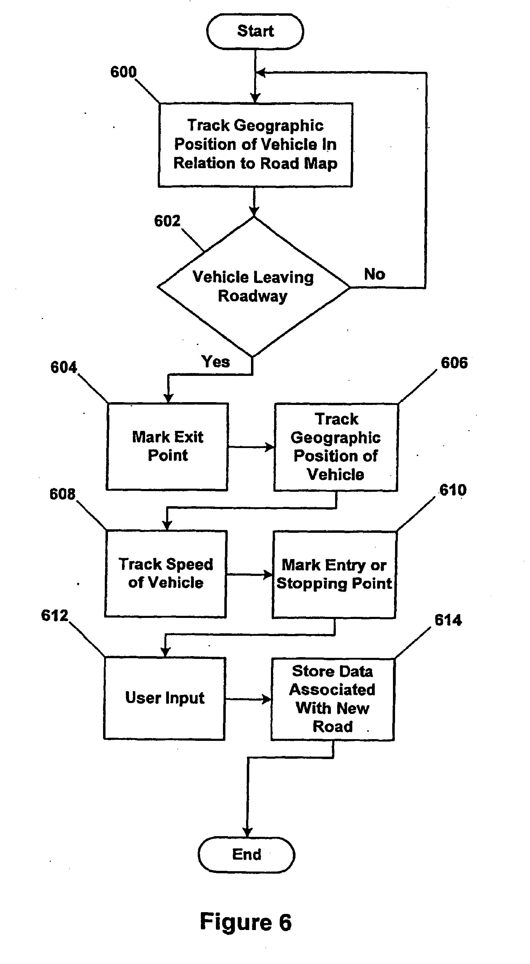

In Figure 6, example process steps that may be performed by the new road learning component 304 are described with reference to Figures 1-3. The new road learning component 304 may include a vehicle position monitoring component that continuously tracks the position of the vehicle in relation to a road network map contained in the digital map database 108, which is illustrated at step 600. The positioning system 110 may be used by the new road learning component 304 to provide the position of the vehicle in relation to the road network map.

At step 602, the new road learning component 304 determines if the vehicle is leaving a known road segment of the road network map contained in the digital map database 108. If the new road learning component 304 detects that the vehicle has left a road contained in the digital map database 108, the new road learning component 304 may mark the point at which the vehicle left the existing road, which is represented at step 604. The point at which the vehicle leaves the existing road may be marked by storing the geographic coordinates of the vehicle in the memory storage device 116. If the navigation system 100 determines that a new road exists, the point at which the vehicle left the known road may become a node of the new road that will ultimately be added to the digital map database 108. If the vehicle does not leave an existing road, the new road learning component 304 may keep tracking the geographic coordinates of the vehicle until it detects that the vehicle has left an existing or known road.

After the new road learning component 304 determines that the vehicle has left an existing road and has marked and stored the exit point, the geographic position or coordinates of the vehicle will be tracked and stored in the memory storage device 116 while the vehicle is traveling along the new road or path, which is represented at step 606. In addition, at step 608 the speed of the vehicle may also be tracked and stored in the memory storage device 116. The speed of the vehicle may be tracked so that the new road learning component 304 does not erroneously add off-road excursions as new roads in the digital map database 108. A driver that averages traveling above, lets say for example, thirty miles per hours while traveling is likely to be traveling on a new road and not off-road. Although not illustrated, the navigation system 100 may include an internal gyro that may be used to determine changes in angular direction. In new road learning, the internal gyro could be used to help determine off road, new road and road category type by monitoring the vibration levels of the vehicle in the situation of navigating in a new location.

Once the driver reaches a stopping point or enters another known road in the road network map of the digital map database 108, the new road learning component 304 may mark the point at which the vehicle stopped or entered the existing road, which is illustrated at step 610. The point at which the vehicle stopped or entered an existing road will become another node of the new road segment. The geographic coordinates of the portion of road between the two nodes that has been stored by the new road learning component 304 is the new road segment. At step 612, the new road learning component 304 may prompt the driver for input about the new road. At that point, the driver may enter data about the road segment such as a road name, a speed limit, road characteristics and so forth. The data about the new road segment may then be stored in the digital map database 108 or the memory storage device 116 for future reference, which is illustrated at step 614.

As set forth above, the new road learning component 304 of the AI module 210 automatically learns new roads and updates the road network map of the navigation system 100 accordingly. The new road learning component 304 automatically detects when a vehicle leaves an existing road, tracks the path traveled by the vehicle while off the existing road, and then adds the tracked new road segment to the road network map. The navigation control unit 102 may use the wireless access system 112 to upload the data about the new road segment to the navigation server 114 in other implementations of the invention.

During operation, the AI module 210 may overwrite data that is contained in the digital map database 108 to correct mistakes in the digital map database 108. In addition, the AI module 210 may store data in the memory storage device 116 to indicate changes in routes, driver preferences or habits, and errors in the digital map database 108. Some digital map database files may be located on a read-only platform and as such, they may not be capable of being overwritten. As such, for these type of data files, the correction data or driver preference and/or habit data may be stored in the memory storage device 116.

While various embodiments of the invention have been described, it will be apparent to those of ordinary skill in the art that many more embodiments and implementations are possible that are within the scope of the invention. Accordingly, the invention is not to be restricted except in light of the attached claims.

## Claims

1. A vehicle navigation system (100) comprising:
a digital map database (108) containing a road map; and
an artificial intelligence module (210) for tracking a geographic position of a vehicle as a function of the road map, where the artificial intelligence module determines if the vehicle leaves a road segment of the road map, where the geographic position of the vehicle is tracked while the vehicle has left the road segment of the road map, where a new road segment is added to the road map, and
**characterized in that**
the new road segment is not added to the digital map database if a rate of travel of the vehicle while the vehicle is traveling on the new road segment does not exceed a predetermined rate.

2. The vehicle navigation system of claim 1, where the geographic position of the new road segment is stored in the digital map database.

3. The vehicle navigation system of claim 1, where the digital map database is connected with a navigation server (114) connected with the vehicle navigation system.

4. The vehicle navigation system of claim 1, further comprising a user interface module (206) that generates a user interface for the driver requesting a predetermined amount of information about the new road segment.

5. The vehicle navigation system of claim 1, where an exit point is marked where the vehicle leaves the road segment.

6. The vehicle navigation system of claim 5, where an entry point is marked where the vehicle leaves the new road segment.

7. The vehicle navigation system of claim 1, where a rate of travel of the vehicle is monitored while the vehicle is traveling on the new road segment.

8. A method of adding new roads in a vehicle navigation system comprising the steps of:
tracking (600) a geographic position of a vehicle as a function of a road map contained in a digital map database (108);
monitoring (602) the road map to determine if the vehicle leaves a road segment of the road map;
recording (606) the geographic position of the vehicle while the vehicle has left the road segment;
updating the road map contained in the digital map database to include a new road segment based on the geographic position of the vehicle while the vehicle had left the road segment, and
**characterized in that**
the digital map database is not updated if a rate of travel of the vehicle while the vehicle has left the road segment does not exceed a certain threshold value.

9. The method of claim 8, further comprising marking (604) an exit point of the vehicle when the vehicle leaves the road segment, where the exit point will become a node of the new road segment.

10. The method of claim 8, further comprising marking (610) an entry point of the vehicle when the vehicle leaves the new road segment and enters a known road segment, where the entry point will become a node of the new road segment.

11. The method of claim 8, further comprising marking (604) an exit point of the vehicle when the vehicle leaves the road segment and marking (610) an entry point of the vehicle when the vehicle leaves the new road segment and enters a known road segment, where the exit point and the entry point are used to define nodes of the new road segment.

12. The method of claim 8, further comprising tracking (608) a rate of travel of the vehicle while the vehicle has left the road segment.

13. A computer program product for use in a vehicle navigation system comprising:
a computer usable medium having computer readable program code embodied in the medium for adding new roads to a digital map database (108), the computer program product comprising:
computer readable program code to track a geographic position of a vehicle as a function of a road map contained in a digital map database;
computer readable program code to monitor the road map to determine if the vehicle leaves a road segment of the road map;
computer readable program code to record the geographic position of the vehicle while the vehicle has left the road segment;
computer readable program code to update the road map contained in the digital map database to include a new road segment that is based on the geographic position of the vehicle while the vehicle had left the road segment, and
**characterized in that**
the digital map database is not updated if an average rate of travel of the vehicle while the vehicle has left the road segment does not exceed a predetermined threshold value.

14. The computer program product of claim 13, further comprising computer readable program code to mark (604) an exit point of the vehicle when the vehicle leaves the road segment, where the exit point will become a node of the new road segment.

15. The computer program product of claim 13, further comprising computer readable program code to mark (610) an entry point of the vehicle when the vehicle leaves the new road segment and enters a known road segment, where the entry point will become a node of the new road segment.

16. The computer program product of claim 13, further comprising computer readable program code to mark (604) an exit point of the vehicle when the vehicle leaves the road segment and to mark (610) an entry point of the vehicle when the vehicle leaves the new road segment and enters a known road segment, where the exit point and the entry point are used to define nodes of the new road segment.

17. The computer program product of claim 13, further comprising computer readable program code to track (608) a rate of travel of the vehicle while the vehicle has left the road segment.

18. The vehicle navigation system of claim 1, where a vibration level of the vehicle is monitored while the vehicle is traveling on the new road segment.

19. The vehicle navigation system of claim 18, where the new road segment is not added to the digital map database if the vibration level exceeds a predetermined rate.

20. The computer program product of claim 13, further comprising computer readable program code to monitor a vibration level of the vehicle while the vehicle has left the road segment.

21. The computer program of claim 20, where the digital map database is not updated if the vibration level of the vehicle exceeds a predetermined threshold value.

## Patentansprüche

1. Ein Fahrzeugnavigationssystem (100) umfassend:
eine digitale Kartendatenbank (108), die eine Straßenkarte enthält; und
ein Modul für künstliche Intelligenz (210) zum Verfolgen einer geographischen Position eines Fahrzeugs als eine Funktion der Straßenkarte, wobei das Modul für künstliche Intelligenz bestimmt, ob das Fahrzeug einen Straßenabschnitt der Straßenkarte verlässt, wobei die geographische Position des Fahrzeugs verfolgt wird, während das Fahrzeug den Straßenabschnitt der Straßenkarte verlassen hat, wobei ein neuer Straßenabschnitt zu der Straßenkarte hinzugefügt wird, und
**gekennzeichnet dadurch, dass**
der neue Straßenabschnitt nicht zu der digitalen Kartendatenbank hinzugefügt wird, wenn eine Bewegungsrate des Fahrzeugs, während sich das Fahrzeug auf dem neuen Straßenabschnitt bewegt, nicht eine vorbestimmte Rate überschreitet.

2. Das Fahrzeugnavigationssystem nach Anspruch 1, wobei die geographische Position des neuen Straßenabschnittes in der digitalen Kartendatenbank abgespeichert wird.

3. Das Fahrzeugnavigationssystem nach Anspruch 1, wobei die digitale Kartendatenbank mit einem Navigationsserver (114) verbunden ist, der mit dem Fahrzeugnavigationssystem verbunden ist.

4. Das Fahrzeugnavigationssystem nach Anspruch 1, weiterhin umfassend ein Modul für die Benutzerschnittstelle (206), das eine Benutzerschnittstelle für den Fahrer erzeugt, der eine vorbestimmte Menge an Information über den neuen Straßenabschnitt anfordert.

5. Das Fahrzeugnavigationssystem nach Anspruch 1, wobei ein Austrittspunkt markiert wird, wo das Fahrzeug den Straßenabschnitt verlässt.

6. Das Fahrzeugnavigationssystem nach Anspruch 5, wobei der Eintrittspunkt markiert wird, wo das Fahrzeug den neuen Straßenabschnitt verlässt.

7. Das Fahrzeugnavigationssystem nach Anspruch 1, wobei eine Bewegungsrate des Fahrzeugs überwacht wird während sich das Fahrzeug auf dem neuen Straßenabschnitt bewegt.

8. Ein Verfahren um neue Straßen zu einem Fahrzeugnavigationssystem hinzuzufügen, umfassend der Schritte von:
Verfolgen (600) einer geographischen Position eines Fahrzeugs als eine Funktion einer Straßenkarte, die in einer digitalen Kartendatenbank (108) enthalten ist;
Überwachen (602) der Straßenkarte, um zu bestimmen, ob das Fahrzeug einen Straßenabschnitt der Straßenkarte verlässt;
Speichern (606) der geographischen Position des Fahrzeugs, während das Fahrzeug den Straßenabschnitt verlassen hat;
Aktualisieren der Straßenkarte, die in der digitalen Kartendatenbank enthalten ist, um einen neuen Straßenabschnitt aufzunehmen, basierend auf der geographischen Position des Fahrzeugs, während das Fahrzeug den Straßenabschnitt verlassen hat, und
**gekennzeichnet dadurch, dass**
die digitale Kartendatenbank nicht aktualisiert wird, wenn eine Bewegungsrate des Fahrzeugs, während das Fahrzeug den Straßenabschnitt verlassen hat, nicht einen bestimmten Grenzwert überschreitet.

9. Das Verfahren nach Anspruch 8, weiterhin umfassend Markieren (604) eines Austrittspunks des Fahrzeugs wenn das Fahrzeug den Straßenabschnitt verlässt, wobei der Austrittspunkt ein Knoten von dem neuen Straßenabschnitt werden wird.

10. Das Verfahren nach Anspruch 8, weiterhin umfassend Markieren (610) eines Eintrittspunktes des Fahrzeugs, wenn das Fahrzeug den neuen Straßenabschnitt verlässt und in einen bekannten Straßenabschnitt eintritt, wobei der Eintrittspunkt ein Knoten des neuen Straßenabschnittes werden wird.

11. Das Verfahren nach Anspruch 8, weiterhin umfassend Markieren (604) eines Austrittspunktes des Fahrzeugs, wenn das Fahrzeug den Straßenabschnitt verlässt und Markieren (610) eines Eintrittspunktes des Fahrzeugs, wenn das Fahrzeug den neuen Straßenabschnitt verlässt und in einen bekannten Straßenabschnitt eintritt, wobei der Austrittspunkt und der Eintrittspunkt verwendet werden, um Knoten des neuen Straßenabschnittes zu definieren.

12. Das Verfahren nach Anspruch 8, weiterhin umfassend Verfolgen (608) einer Bewegungsrate des Fahrzeugs, während das Fahrzeug den Straßenabschnitt verlassen hat.

13. Ein Computerprogrammprodukt zur Verwendung in einem Fahrzeugnavigationssystem umfassend:
einen für einen Computer verwendbaren Datenträger, der maschinenlesbaren Programmcode hat, der in dem Datenträger eingebettet ist, um neue Straßen zu einer digitalen Kartendatenbank (108) hinzuzufügen, wobei das Computerprogrammprodukt umfasst:
maschinenlesbarer Programmcode um eine geographische Position eines Fahrzeugs als eine Funktion einer Straßenkarte zu verfolgen, die in einer digitalen Kartendatenbank enthalten ist;
maschinenlesbarer Programmcode um die Straßenkarte zu überwachen um zu bestimmen, ob das Fahrzeug einen Straßenabschnitt der Straßenkarte verlässt;
maschinenlesbarer Programmcode um die geographische Position des Fahrzeugs zu speichern während das Fahrzeug den Straßenabschnitt verlassen hat;
maschinenlesbarer Programmcode um die Straßenkarte, die in der digitalen Kartendatenbank enthalten ist, zu aktualisieren, um einen neuen Straßenabschnitt aufzunehmen, der basiert auf der geographischen Position des Fahrzeugs während das Fahrzeug den Straßenabschnitt verlassen hat, und
**gekennzeichnet dadurch, dass**
die digitale Kartendatenbank nicht aktualisiert wird, wenn eine durchschnittliche Bewegungsrate des Fahrzeugs, während das Fahrzeug den Straßenabschnitt verlassen hat, nicht einen vorgegebenen Grenzwert überschreitet.

14. Das Computerprogrammprodukt nach Anspruch 13, weiterhin umfassend einen maschinenlesbaren Programmcode um einen Austrittspunkt des Fahrzeugs zu markieren (604), wenn das Fahrzeug den Straßenabschnitt verlässt, wobei der Austrittspunkt ein Knoten des neuen Straßenabschnittes werden wird.

15. Das Computerprogrammprodukt nach Anspruch 13, weiterhin umfassend einen maschinenlesbaren Programmcode um einen Eintrittspunktes des Fahrzeugs zu markieren (610), wenn das Fahrzeug den neuen Straßenabschnitt verlässt und in einen bekannten Straßenabschnitt eintritt, wobei der Eintrittspunkt ein Knoten des neuen Straßenabschnittes werden wird.

16. Das Computerprogrammprodukt nach Anspruch 13, weiterhin umfassend einen maschinenlesbaren Programmcode um einen Austrittspunkt des Fahrzeugs zu markieren (604), wenn das Fahrzeug den Straßenabschnitt verlässt und um einen Eintrittspunkt des Fahrzeugs zu markieren (610), wenn das Fahrzeug den neuen Straßenabschnitt verlässt und in einen bekannten Straßenabschnitt eintritt, wobei der Austrittspunkt und der Eintrittspunkt verwendet werden um Knoten des neuen Straßenabschnittes zu definieren.

17. Das Computerprogrammprodukt nach Anspruch 13, weiterhin umfassend einen maschinenlesbaren Programmcode um eine Bewegungsrate des Fahrzeugs zu verfolgen (608), während das Fahrzeug den Straßenabschnitt verlassen hat.

18. Das Fahrzeugnavigationssystem nach Anspruch 1, wobei ein Vibrationsgrad des Fahrzeugs überwacht wird, während sich das Fahrzeug auf dem neuen Straßenabschnitt bewegt.

19. Das Fahrzeugnavigationssystem nach Anspruch 18, wobei der neue Straßenabschnitt nicht zu der digitalen Kartendatenbank hinzugefügt wird, wenn der Vibrationsgrad eine vorbestimmte Rate überschreitet.

20. Das Computerprogrammprodukt nach Anspruch 13, weiterhin umfassend einen maschinenlesbaren Programmcode um einen Vibrationsgrad des Fahrzeugs zu überwachen, während das Fahrzeug den Straßenabschnitt verlassen hat.

21. Das Computerprogramm nach Anspruch 20, wobei die digitale Kartendatenbank nicht aktualisiert wird, wenn der Vibrationsgrad des Fahrzeugs einen vorbestimmten Grenzwert überschreitet.

## Revendications

1. Système de navigation pour véhicule (100) comprenant :
une base de données de cartes numériques (108) contenant une carte routière ; et
un module d'intelligence artificielle (210) destiné à suivre une position géographique d'un véhicule en fonction de la carte routière, dans lequel le module d'intelligence artificielle détermine si le véhicule quitte un segment de route de la carte routière, dans lequel la position géographique du véhicule est suivie lorsque le véhicule a quitté le segment de route de la carte routière, dans lequel un nouveau segment de route est ajouté à la carte routière, et
**caractérisé en ce que**
le nouveau segment de route n'est pas ajouté à la base de données de cartes numériques si une vitesse de déplacement du véhicule, lorsque le véhicule se déplace sur le nouveau segment de route, ne dépasse pas une vitesse prédéterminée.

2. Système de navigation pour véhicule selon la revendication 1, dans lequel la position géographique du nouveau segment de route est stockée dans la base de données de cartes numériques.

3. Système de navigation pour véhicule selon la revendication 1, dans lequel la base de données de cartes numériques est reliée à un serveur de navigation (114) relié au système de navigation pour véhicule.

4. Système de navigation pour véhicule selon la revendication 1, comprenant en outre un module d'interface utilisateur (206) qui génère une interface utilisateur pour le conducteur demandant une quantité prédéterminée d'informations relatives au nouveau segment de route.

5. Système de navigation pour véhicule selon la revendication 1, dans lequel un point de sortie est indiqué à l'endroit auquel le véhicule quitte le segment de route.

6. Système de navigation pour véhicule selon la revendication 5, dans lequel un point d'entrée est indiqué à l'endroit auquel le véhicule quitte le nouveau segment de route.

7. Système de navigation pour véhicule selon la revendication 1, dans lequel une vitesse de déplacement du véhicule est surveillée lorsque le véhicule se déplace sur le nouveau segment de route.

8. Procédé d'ajout de nouvelles routes dans un système de navigation pour véhicule comprenant les étapes consistant à :
suivre (600) une position géographique d'un véhicule en fonction d'une carte routière contenue dans une base de données de cartes routières (108) ;
surveiller (602) la carte routière afin de déterminer si le véhicule quitte un segment de route de la carte routière ;
enregistrer (606) la position géographique du véhicule lorsque le véhicule a quitté le segment de route ;
mettre à jour la carte routière contenue dans la base de données de cartes numériques afin d'inclure un nouveau segment de route sur la base de la position géographique du véhicule lorsque le véhicule a quitté le segment de route, et
**caractérisé en ce que**
la base de données de cartes numériques n'est pas mise à jour si une vitesse de déplacement du véhicule, lorsque le véhicule a quitté le segment de route, ne dépasse pas une certaine valeur de seuil.

9. Procédé selon la revendication 8, comprenant en outre l'indication (604) d'un point de sortie du véhicule lorsque le véhicule quitte le segment de route, dans lequel le point de sortie devient un noeud du nouveau segment de route.

10. Procédé selon la revendication 8, comprenant en outre l'indication (610) d'un point d'entrée du véhicule lorsque le véhicule quitte le nouveau segment de route et entre sur un segment de route connu, le point d'entrée devenant un noeud du nouveau segment de route.

11. Procédé selon la revendication 8, comprenant en outre l'indication (604) d'un point de sortie du véhicule lorsque le véhicule quitte le segment de route et l'indication (610) d'un point d'entrée du véhicule lorsque le véhicule quitte le nouveau segment de route et entre sur un segment de route connu, le point de sortie et le point d'entrée étant utilisés afin de définir des noeuds du nouveau segment de route.

12. Procédé selon la revendication 8, comprenant en outre le suivi (608) d'une vitesse de déplacement du véhicule lorsque le véhicule a quitté le segment de route.

13. Produit de programme informatique destiné à être utilisé dans un système de navigation pour véhicule comprenant :
un support utilisable par un ordinateur et ayant un code de programme lisible par ordinateur intégré dans le support afin d'ajouter de nouvelles routes à une base de données de cartes numériques (108), le produit de programme informatique comprenant :
un code de programme lisible par ordinateur destiné à suivre une position géographique d'un véhicule en fonction d'une carte routière contenue dans une base de données de cartes numériques ;
un code de programme lisible par ordinateur destiné à surveiller la carte routière afin de déterminer si le véhicule quitte un segment de route de la carte routière ;
un code de programme lisible par ordinateur destiné à enregistrer la position géographique du véhicule lorsque le véhicule a quitté le segment de route ;
un code de programme lisible par ordinateur destiné à mettre à jour la carte routière contenue dans la base de données de cartes numériques afin d'inclure un nouveau segment de route qui est basé sur la position géographique du véhicule lorsque le véhicule a quitté le segment de route ; et
**caractérisé en ce que**
la base de données de cartes numériques n'est pas mise à jour si une vitesse de déplacement moyenne du véhicule, lorsque le véhicule a quitté le segment de route, ne dépasse pas une valeur de seuil prédéterminée.

14. Produit de programme informatique selon la revendication 13, comprenant en outre un code de programme lisible par ordinateur destiné à indiquer (604) un point de sortie du véhicule lorsque le véhicule quitte le segment de route, le point de sortie devenant un noeud du nouveau segment de route.

15. Produit de programme informatique selon la revendication 13, comprenant en outre un code de programme lisible par ordinateur destiné à indiquer (610) un point d'entrée du véhicule lorsque le véhicule quitte le nouveau segment de route et entre sur un segment de route connu, le point d'entrée devenant un noeud du nouveau segment de route.

16. Produit de programme informatique selon la revendication 13, comprenant en outre un code de programme lisible par ordinateur destiné à indiquer (604) un point de sortie du véhicule lorsque le véhicule quitte le segment de route et à indiquer (610) un point d'entrée du véhicule lorsque le véhicule quitte le nouveau segment de route et entre sur un segment de route connu, le point de sortie et le point d'entrée étant utilisés afin de définir des noeuds du nouveau segment de route.

17. Produit de programme informatique selon la revendication 13, comprenant en outre un code de programme lisible par ordinateur destiné à suivre (608) une vitesse de déplacement du véhicule lorsque le véhicule a quitté le segment de route.

18. Système de navigation pour véhicule selon la revendication 1, dans lequel un niveau de vibration du véhicule est surveillé lorsque que le véhicule se déplace sur le nouveau segment de route.

19. Système de navigation pour véhicule selon la revendication 18, dans lequel le nouveau segment de route n'est pas ajouté à la base de données de cartes numériques si le niveau de vibration dépasse un taux prédéterminé.

20. Produit de programme informatique selon la revendication 13, comprenant en outre un code de programme lisible par ordinateur destiné à surveiller un niveau de vibration du véhicule lorsque le véhicule a quitté le segment de route.

21. Programme informatique selon la revendication 20, dans lequel la base de données de cartes numériques n'est pas mise à jour si le niveau de vibration du véhicule dépasse une valeur de seuil prédéterminée.
